(19) Europäisches Patentamt
European Patent Office
Office européen des brevets

(11) **EP 0 702 658 B1**

(12) **EUROPEAN PATENT SPECIFICATION**

(45) Date of publication and mention
of the grant of the patent:
**28.05.1997 Bulletin 1997/22**

(51) Int Cl.⁶: **B65G 33/26**

(86) International application number:
**PCT/DK94/00240**

(21) Application number: **94918767.8**

(22) Date of filing: **17.06.1994**

(87) International publication number:
**WO 95/00423 (05.01.1995 Gazette 1995/02)**

(54) **SCREW OR WORM CONVEYOR**

FÖRDERSCHNECKE

CONVOYEUR A VIS SANS FIN

(84) Designated Contracting States:
**AT BE CH DE DK ES FR GB GR IE IT LI LU MC NL PT SE**

(30) Priority: **18.06.1993 DK 721/93**

(43) Date of publication of application:
**27.03.1996 Bulletin 1996/13**

(73) Proprietors:
• **AS PHONIX CONTRACTORS**
  **6600 Vejen (DK)**
• **Sogaard, Dennis**
  **5700 Svendborg (DK)**

(72) Inventor: **SOGAARD, Dennis**
**DK-5700 Svendborg (DK)**

(74) Representative: **Lichtenberg, Erik et al**
**Chas. Hude,**
**33 H.C. Andersens Boulevard**
**1553 Copenhagen V (DK)**

(56) References cited:
**US-A- 2 847 197**          **US-A- 4 733 607**

## Description

<u>Technical Field</u>

The invention relates to a screw or worm conveyor of the type stated in the introduction to claim 1.

<u>Background Art</u>

A worm conveyor of this type is designed, as stated in the introduction to claim 1, for the transport of solids such as soil, clay, sand, grit, sludge, fertilizer, compost, bark, wood chippings, sawdust, composite materials, metal powder, fly ash, dust, ash, slag, coal, coke, pitch, road materials, cement, glass, concrete, salt, etc. This is not an exhaustive list of the solids that can be transported.

An example of the use of a screw conveyor such as the one in question is shown in the applicant's international patent application EP-A-561 955, in which a similar worm conveyor is incorporated in a plant used for the continuous purification of contaminated material such as soil, sand, stones, drilling materials, etc. In this plant it is significant that the worm conveyor transports the material in one direction in the bottom one-third of the pipe in which it rotates, while an extraction agent is conveyed in the opposite direction through the pipe. In some designs the worm conveyor has no axle or core shaftless, which means that the solids can be conveyed in the rotational direction of the conveyor screw, while the extraction agent can be conveyed in the opposite direction through the opening inside the radial inside contour of the conveyor screw.

US patent no. 4.091.693 shows a conveyor screw consisting of two components screwed together in the form of a thread ("composite helix"). The radial outside of these components consists of hard-wearing material.

The composite conveyor screw has no core, and is used to remove drilling material from a drill bit which is fixed to an axle driven by a drive unit. The conveyor screw is not fixed to the axle, but only to the drill bit, which means that there is clearance between the conveyor screw and the axle.

JP No. 63-117813 (A) shows a screw conveyor which has no core or axle. A drive motor is connected to the end of the conveyor screw thread, thereby driving the conveyor screw into rotation.

The outside contour of the thread or thread on the conveyor screw in some well-known screw conveyors is equipped with hard-wearing elements to protect it from erosion. For instance, this applies to the radial outside component of the conveyor screw mentioned in the above-mentioned US patent No. 4,091,693. Similarly, the conveyor screw or spiral mentioned in DK patent No. 148,736, which is fixed to a hollow axle in a decanter centrifuge, is protected from erosion by an unbroken row of hard metal plates along the radial outside surface of the thread (or threads, since it is double-threaded), granting protection from the erosion which would be caused in an unprotected conveyor screw owing to the highly eroding nature of the solids being transported.

US patent No. 4,733,607 shows a mixer for foodstuffs or similar. It contains of a couple of vertical troughs in which some kneading organs of ribbons (agitator) are rotating. The mixed material is filled as a portion into the vessel through its opening. If the portion is to be mixed warm, steam is added. In this known apparatus there is in no way reference to transportation from one end to the other, but to the mixing of a portion. In order for the mixture not to stick to the walls, the apparatus is fitted with scraper bodies which are fitted pivotally onto the ribbons so that they during operation are in touch with the wall of the mixing chamber.

The ribbons are not supported and do not rest on any of these scraper bodies. Neither are they operated in the side direction of the scraper bodies as is the case for the hard-wearing elements according to the present patent application.

<u>Brief Description of the Invention</u>

The object of this invention is to construct a screw conveyor of the type mentioned in the introduction, in which the hard-wearing elements help:

to prevent the fine-grained part of the solids which are being transported from forming a cake between the pipe/trough and conveyor screw (with a tendency to cementing), which tends to occur in particular during the transport of compressible materials,

to reduce the frictional resistance, and thereby power consumption,

to function as a wearing part, thereby minimising the wear and tear on the conveyor screw,

to improve the mixing effect of the conveyor screw, and to keep the material homogeneous, to make room for a liquid drain (e.g. in a drain ring) and washing screw.

This object can be achieved by the invention because the screw conveyor is designed as stipulated in the characteristic part of claim 1.

The conveyor screw is supported by (and rests on) some of the hard-wearing elements - primarily those which are at the bottom at any time. At the same time, the conveyor screw can be supported and guided laterally by other hard-wearing elements which are located by the sides of the trough or pipe at any time. Owing to the fact that the hard-wearing elements are located at intervals, the specific pressure at which they are held against the pipe or trough is greater than that of the hard-wearing elements in existence until now, which run in an unbroken row along the contour of the thread (see for instance DK patent no. 148.736). As a result, the hard-wearing elements in the screw conveyor according to the invention cut through the solid material more easily. The hard-wearing elements are longitudinal, with their greatest extent in the axial direction of the conveyor screw, which means that during rotation they hit the solid material near the surface of the trough or pipe roughly at right-angles to the angle at which the solids are hit by the thread or threads. This increases the mixing effect, mixing the fine-grain material on the surface of the pipe or trough with the coarser solid material. This helps to keep the material homogeneous during transport, as well as reducing the frictional resistance. In addition, room is made for a liquid drain in the gaps between the hard-wearing elements.

The invention also concerns a screw conveyor of the type stated in the introduction to claim 6. This is the type of conveyor whose conveyor screw is supported by an axle supported by bearings in conventional fashion. This applies to the conveyor screw described in the above-mentioned DK patent no. 148.736. In a screw conveyor like this the conveyor screw does not rest on the hard-wearing elements. However, if the distance between the hard-wearing elements and the bottom of the pipe is as small as possible, any caking that occurs will be thin and easy to break, ensuring that transport of the solid material can continue.

If the screw conveyor mentioned in the introduction to claim 6 is designed as stated in the characteristic part of claim 6, most of the advantages gained in connection with claim 1 can be obtained, even though the hard-wearing elements are not directly affected by pressure from the weight of the conveyor screw.

## Brief Description of the Drawings

The invention is described in greater detail below with reference to the drawings, where

Fig. shows the design of a screw conveyor according to the invention, a design in which a conveyor screw is fixed to a supporting axle,

Fig. 2 shows a cross-section along line 2-2 in Fig. 1,

Fig. 3 shows a cross-section corresponding to Fig. 2 of a design in which the conveyor screw rotates in a semi-circular trough instead of in the closed pipe shown in Figs. 1 and 2,

Fig. 4 shows a section of another conveyor screw design for the screw conveyor according to the invention,

Fig. 5 shows a cross-section of the design of the conveyor screw shown in Fig. 4,

Fig. 6 shows a perspective example of the way a hard-wearing element can be attached to the thread of the conveyor screw,

Fig. 7 shows the same as Fig. 6, seen in the direction of movement of the screw conveyor,

Fig. 8, like Fig. 6, shows a perspective view of another hard-wearing element on the conveyor screw thread,

Fig. 9 shows the same as Fig. 7, seen in the direction of movement of the screw conveyor, and

Fig. 10 shows the same as Fig. 7, shown at right-angles to the direction of movement of the screw conveyor.

## Best Mode for Carrying Out the Invention

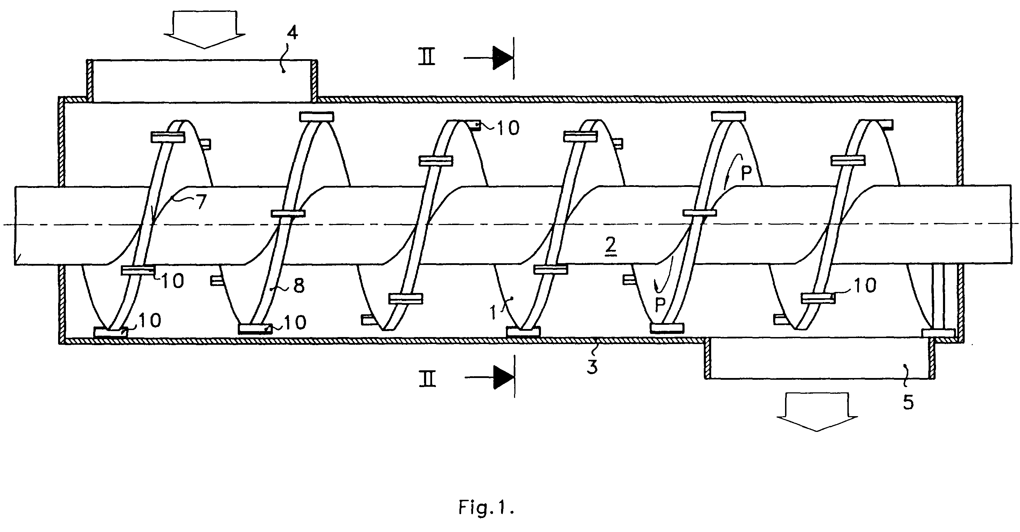

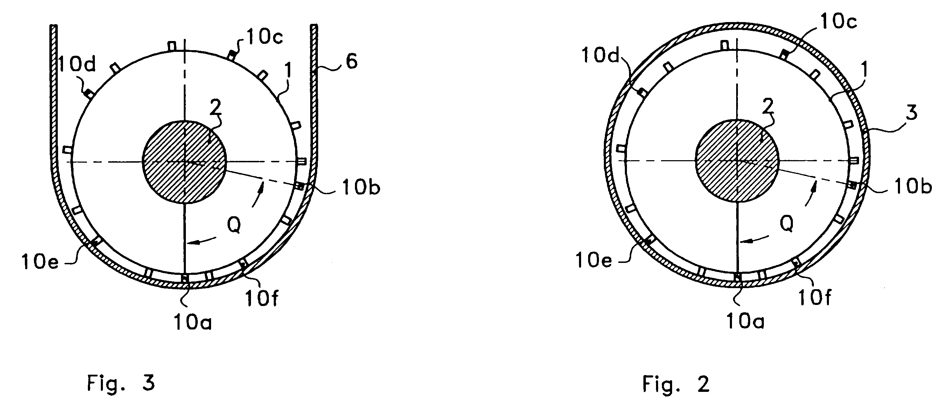

Figs. 1 and 2 show a screw conveyor consisting of a conveyor screw 1, which in the design shown is single-threaded, i.e. it only has a single helical thread. Conveyor screw 1 is fixed, e.g. welded to a rotating axle 2 on the radial inside contour 7 of the thread, so that the axle 2 and conveyor screw 1 rotate in the direction shown by the arrows P.

The axle 2 is embedded in a stationary closed pipe 3, which at one end has an upward-facing input opening 4 for the entrance of solids, and a downward-facing output opening 5 for emptying solids, which are transported by the conveyor screw 1 from the input opening 4 to the output opening 5.

The bearings for axle 2 and the means used to drive it into rotation are conventional, and are therefore not shown or described in detail.

As shown in Fig. 3, the axle 2 and conveyor screw 1 can be embedded in a semi-circular trough 6 during rotation, instead of being embedded in a closed pipe.

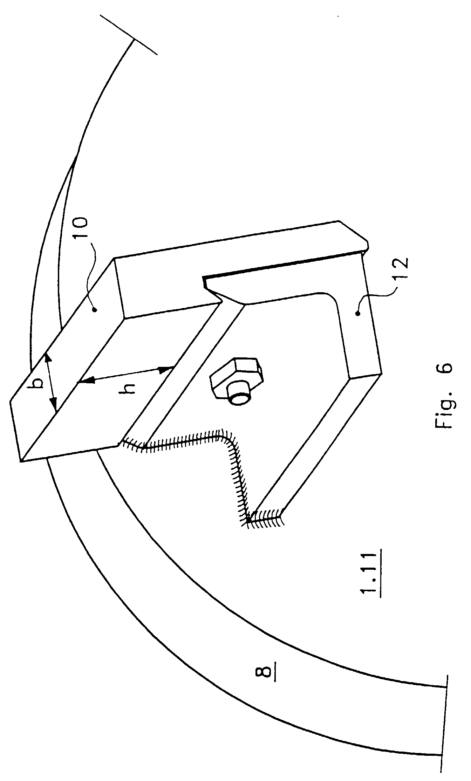

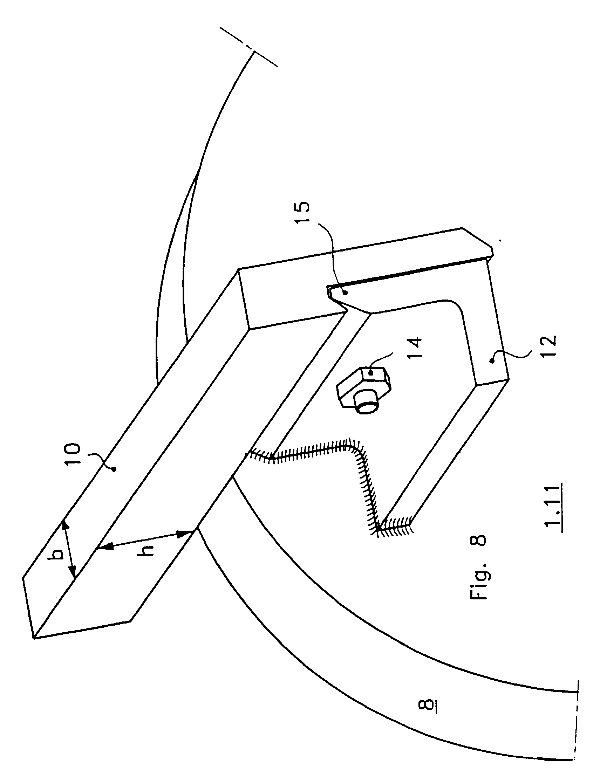

At regular intervals in a circumferential direction, hard-wearing elements 10 are attached to the radial outside contour 8 of the thread of the conveyor screw 1, designed in the form of longitudinal, rod-shaped elements 10 with a length of I and a rectangular cross-section with a height of h and a width of b (see figs. 6 and 8).

The greatest extent I of the hard-wearing elements 10 is in the axial direction of the conveyor screw, and in the design shown they are located at an equidistant angle from each other of Q.

In Fig. 2 six consecutive hard-wearing elements at an equidistant angle from each other of Q where Q is 78 degrees are designated 10 a, 10 b, 10 c, 10 d, 10 e and 10 f.

A suitable angle (Q) between consecutive hard-wearing elements is between 60° and 90° (see below for further details).

The length I of each hard-wearing element should be big enough (at least) to ensure that the elements 10 overlap each other in a longitudinal direction; i.e. that there are no areas in the pipe 3 or trough 6 which are not passed by a hard-wearing element 10 during the rotation of the conveyor screw. If the pitch of the conveyor screw 1 is t, and the above-mentioned angle between two consecutive hard-wearing elements 10 in degrees is Q, then the following must apply to ensure that the elements overlap:

$$l > \frac{t \times Q}{360}$$

In the design shown in figs. 1 to 3, the conveyor screw 1 has a supporting axle 2, as mentioned above, which means that the conveyor screw does not rest directly on the hard-wearing elements, but that most of its weight is supported by the bearings of axle 2. However, the distance between the hard-wearing elements 10 and the bottom of the pipe 3 or trough 6 should be as small as possible, so the cake of fine-grained material formed by the solids in the pipe or trough will be thin and easy to break, ensuring that transport of the solid material can continue.

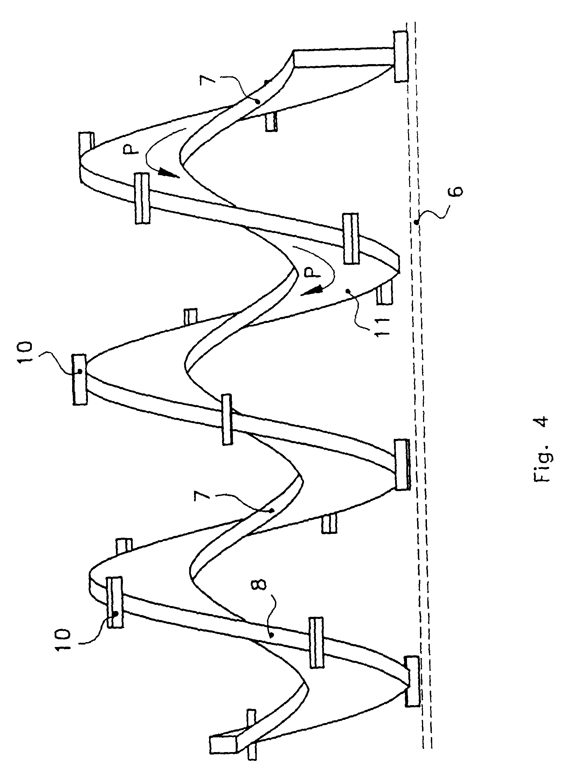

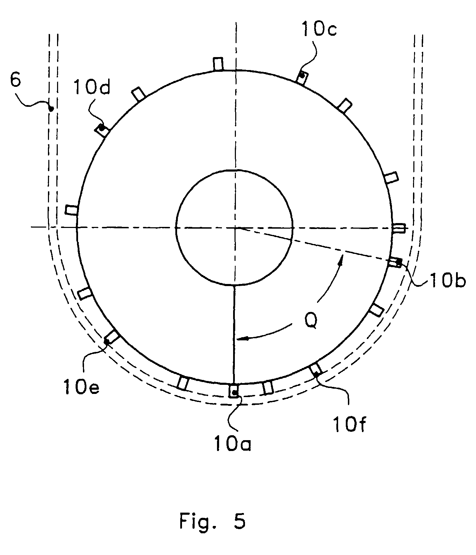

Figs. 4 and 5 show a different design of the conveyor screw 11 in accordance with the invention; or to be more precise a section of the conveyor screw 11 shown in connection with a semi-circular trough 6 which is indicated by dotted lines. The distinguishing feature of this conveyor screw 11 is that it is not attached to a supporting axle, and that it has no core. Otherwise the hard-wearing elements 10 have the same design as that shown in figs. 1 to 3, and instead of the semi-circular trough 6 the conveyor screw 11 with no core or axle rotates in a closed pipe such as that shown in figs. 1 and 2. By rotating in the direction of the arrows P, the conveyor screw 11 can also transport solids from an input opening to an output opening (not shown, but the same as openings 4 and 5 shown in Fig. 1).

However, the fact that the conveyor screw 11 shown has no supporting axle means that it rests on some of the hard-wearing elements 10, primarily the ones at the bottom at any time. The conveyor screw 11 is also supported to some extent in a lateral direction by the other hard-wearing elements 10 located by the sides of the trough 6 or pipe 3 at any time.

Consequently, for the design shown in figs. 4 and 5 it is important to take a number of factors into account when fixing the angle Q between consecutive hard-wearing elements 10 and the length of these elements l.

If there are a great number of hard-wearing elements 10 for each revolution, i.e. a small angle Q, the rotation of the conveyor screw 11 will be more even and less jumpy. The surface pressure per unit of area will be less, which means that the wear and tear on each hard-wearing element 10 will also be less.

However, if there are "too many" hard-wearing elements 10 in the conveyor screw 11 the material may not release easily, and the conveyor screw 11 will become blocked.

The surface pressure per unit of area may also be so low that the ploughing effect of the hard-wearing element 10 may cease altogether, and the element 10 will then skim over the solid material, leading to the risk of caking between the pipe/trough and conveyor screw 11.

In other words, a suitable surface pressure on the hard-wearing element 10, combined with the ploughing or scraping effect of the element, are the two most important factors to ensure non-problematic transport of material.

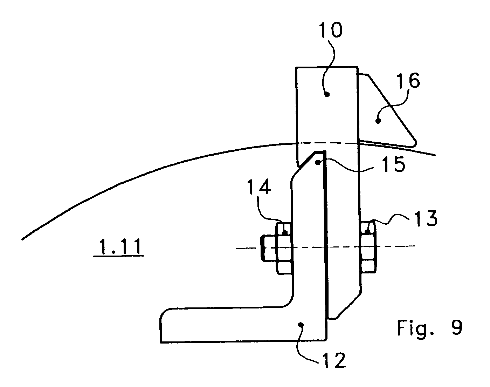

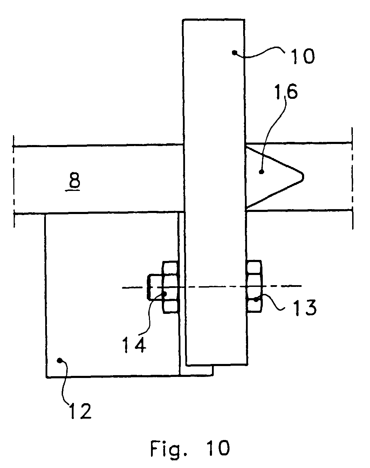

Figs. 6 and 7 and figs. 8, 9 and 10 show examples of the design and attachment of each hard-wearing element, and these figures and the description associated with them can be applied equally to the design of the conveyor screw in figs. 1 to 3 and the design of the conveyor screw in figs. 4 and 5.

First, it should be mentioned that each hard-wearing element 10 can, of course, be welded direct to the thread or threads of the conveyor screw (1, 11).

However, it is also possible with a view to making replacement easier following wear and tear to attach the hard-wearing elements 10 to a retention device (12) using a bolt consisting of a screw 13 and nut (14), with the retention device 12 itself being welded onto the side of the thread of the conveyor screw 1, 11 without extending beyond its radial outside contour 8, as shown. The retention device 12 has an extending edge 15, which when mounted fits into a longitudinal depression in each hard-wearing element 10 in order to retain and steer it more effectively.

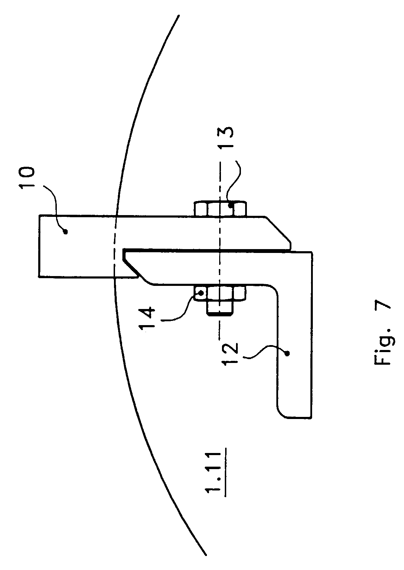

Figs. 6 and 7 show a design in which the hard-wearing element 10 is only situated on one side of the thread of the conveyor screw 1, 11, whereas figs. 8, 9 and 10 show a different design in which the hard-wearing element 10 is located on both sides of the thread of the conveyor screw 1, 11.

The design in figs. 8 to 10 also shows a central ridge 16 on the hard-wearing element 10, a ridge which functions as a stone rejection device to prevent stones in the solid material from becoming stuck between the radial outside contour 8 of the thread and the pipe/trough 3, 6.

The screw conveyors shown have only one thread, but the invention can easily be used for screw conveyors with several screw-shaped threads, e.g. double screw conveyors. In such cases the difference between claims 2 and 7 does not apply, but the principle is still that the hard-wearing elements 10 should just overlap viewed in a longitudinal direction in the screw conveyor.

It should be added that the rectangular cross-section of the hard-wearing elements 10 has a height of h and width of b which is between 10% and 25% of the length l.

**Claims**

1. A worm or conveyor for transporting solids, consisting of a conveyor screw (11) with at least one helical thread, which during rotation in a closed pipe (3) or semi-circular trough (6) functions as a carrier for the solids concerned, and which has hard-wearing elements (10) on its effective surface which extend beyond the radial outside contour (8) of the thread or threads, which conveyor screw (11) has no core or supporting axle, characterized by the fact that the hard-wearing elements (10) which are *immovably* fixed to the radial outside contour (8) of the thread or threads are placed at regular intervals in a circumferential direction round the contour (8), *that the conveyor screw (11) is supported by and rest on some of the hard-wearing elements (10), primarily those which are at the bottom at any time, while at the same time the conveyor screw is supported and guided laterally by other hard wearing elements (10), which are located by the sides of the trough (6) or pipe (3),* and by the fact that the hard-wearing elements (10) are longitudinal, with their greatest extent (1) in the axial direction of the conveyor screw (11).

2. A screw conveyor according to claim 1 which has a single, helical thread, and which is characterized by the fact that the hard-wearing elements (10) are placed at an equidistant angle of Q and a length of l in the axial direction of the conveyor screw (11), determined by the following:

$$l > \frac{t \times Q}{360},$$

where t is the pitch of the screw conveyor
and Q is the angle measured in degrees between two consecutive hard-wearing elements (10).

3. A screw conveyor according to claim 2, characterized by the fact that the longitudinal hard-wearing elements (10) have a rectangular cross-section with a height of h being the distance from the radial outside contour (8) of the thread or threads to an outer edge of the hard-wearing elements (8) and a width of b which is between 10% and 25 % of the length l.

4. A screw conveyor according to all the previous claims, characterized by the fact that the hard-wearing elements (10) are attached so they can be removed (13, 14) to retention devices (12) attached to the thread or threads of the conveyor screw.

5. A screw conveyor according to all the claims 2 to 4, characterized by the fact that the angle (Q) between the hard-wearing elements (10) is between 60° and 90°.

6. A worm or screw conveyor for transporting solids, consisting of a conveyor screw (1) with at least one helical thread, which during rotation in a closed pipe (3) or semi-circular trough (6) functions as a carrier for the solids concerned, and which has hard-wearing elements (10) on its effective surface which extend beyond the radial outside contour (8) of the thread or threads, which conveyor screw (1) is attached to a supporting axle (2) at the radial inside contour (7) of the thread or threads at one or more points or along the entire helical contour, characterized by the fact that the hard-wearing elements (10) which are *immovably* fixed to the radial outside contour (8) of the thread or threads are placed at regular intervals in a circumferential direction round the contour (8), and by the fact that the hard-wearing elements (10) are longitudinal, with their greatest extent (1) in the axial direction of the conveyor screw (1).

7. A screw conveyor according to claim 6 which has a single helical thread, characterized by the fact that the hard-wearing elements (10) are placed at an equidistant angle of Q between each other and a length (l) in the axial direction of the conveyor screw determined by the following:

$$l > \frac{t \times Q}{360},$$

where t is the pitch of the screw conveyor
and Q is the angle measured in degrees between two consecutive hard-wearing elements (10).

8. A screw conveyor according to claim 7, characterized by the fact that the longitudinal hard-wearing elements (10) have a rectangular cross-section with a height of h being the distance from the radial outside contour (8) of the thread or threads to an outer edge of the hard-wearing elements (8) and a width of b which is between 10% and 25% of the length l.

9. A screw conveyor according to all the claims 6 to 8, characterized by the fact the hard-wearing elements (10) are attached so they can be removed (13, 14) to retention devices (12) attached to the thread or threads of the conveyor screw.

10. A screw conveyor according to all the claims 7 to 9, characterized by the fact that the angle (Q) between the hard-wearing elements (10) is between 60° and 90°.

**Patentansprüche**

1. Schnecke oder Förderer zum Transportieren von Feststoffen, bestehend aus einer mit mindestens einer Schraubenwindung versehenen Förderschnecke (11), die bei Drehung in einem geschlossenen Rohr (3) oder einem halbkreisförmigen Trog (6) als Transportmittel für die betreffenden Feststoffe funktioniert, und die an ihrer Arbeitsfläche verschleißresistente Elemente (10) aufweist, welche sich über die radiale Außenkontur (8) der Windung oder der Windungen hinaus erstrecken, wobei die Förderschnecke (11) keinen Kern und keine Lagerachse aufweist,

dadurch gekennzeichnet, daß die verschleißresistenten Elemente (10), die unbeweglich an der radialen Außenkontur (8) der Windung oder der Windungen befestigt sind, mit regulären Abständen im Umfangsrichtung um die Kontur (8) angeordnet sind, daß die Förderschnecke (11) durch einige der verschleißresistenten Elemente (10), hauptsächlich von denjenigen, die sich zu irgendeinem Zeitpunkt auf dem Boden befinden, gestützt ist und auf diesen aufliegt, während die Förderschnecke gleichzeitig durch andere verschleißresistente Elemente (10), die an den Seiten der Wanne (6) oder des Rohrs (3) angeordnet sind, seitlich gestützt und geführt ist, und dadurch, daß die verschleißresistenten Elemente (10) länglich ausgebildet sind, wobei ihre größte Erstreckung (1) in Axialrichtung der Förderschnecke (11) liegt.

2. Schneckenförderer nach Anspruch 1, mit einer einzigen Schraubenwindung, und dadurch gekennzeichnet, daß die verschleißresistenten Elemente (10) mit einem äquidistanten Winkel Q und einer Länge l in der Axialrichtung der Förderschnecke (11) angeordnet sind, die wie folgt bestimmt sind:

$$l > \frac{t \times Q}{360}$$

wobei t die Steigung der Windung des Schneckenförderers ist und Q der in Grad gemessene Winkel zwischen zwei aufeinanderfolgenden verschleißresistenten Elementen (10) ist.

3. Schneckenförderer nach Anspruch 2, dadurch gekennzeichnet, daß die länglichen verschleißresistenten Elemente (10) einen rechteckigen Querschnitt mit einer Höhe h, die der Abstand von der radialen Außenkontur (8) der Windung oder der Windungen zu einem Außenrand der verschleißresistenten Elemente (10) ist, und mit einer Breite b aufweist, die zwischen 10% und 25% der Länge l beträgt.

4. Schneckenförderer nach einem der vorhergehenden Ansprüche, dadurch gekennzeichnet, daß die verschleißresistenten Elemente (10) abnehmbar an Haltevorrichtungen (12) angebracht (13,14) sind, die an der Windung oder den Windungen der Förderschnecke befestigt sind.

5. Schneckenförderer nach einem der Ansprüche 2 bis 4, dadurch gekennzeichnet, daß der Winkel (Q) zwischen den verschleißresistenten Elementen (10) zwischen 60° und 90° beträgt.

6. Schnecke oder Schneckenförderer zum Transportieren von Feststoffen, bestehend aus einer mit mindestens einer Schraubenwindung versehenen Förderschnecke (1), die bei Drehung in einem geschlossenen Rohr (3) oder einem halbkreisförmigen Trog (6) als Transportmittel für die betreffenden Feststoffe funktioniert, und die an ihrer Arbeitsfläche verschleißresistente Elemente (10) aufweist, welche sich über die radiale Außenkontur (8) der Windung oder der Windungen hinaus erstrecken, wobei die Förderschnecke (1) an einer Lagerachse (2) befestigt ist, die an einem oder mehreren Punkten oder entlang der gesamten schraubenförmigen Kontur an der radialen Innenkontur (7) der Windung oder der Windungen angeordnet ist,

dadurch gekennzeichnet, daß die verschleißresistenten Elemente (10), die unbeweglich an der radialen Außenkontur (8) der Windung oder der Windungen befestigt sind, mit regulären Abständen im Umfangsrichtung um die Kontur (8) angeordnet sind, und dadurch, daß die verschleißresistenten Elemente (10) länglich ausgebildet sind, wobei ihre größte Erstreckung (l) in Axialrichtung der Förderschnecke (1) liegt.

7. Schneckenförderer nach Anspruch 6, mit einer einzigen Schraubenwindung, dadurch gekennzeichnet, daß die verschleißresistenten Elemente (10) mit einem äquidistanten Winkel Q zwischen sich und einer Länge (l) in der Axialrichtung der Förderschnecke angeordnet sind, die wie folgt hestimmt sind:

$$l > \frac{t \times Q}{360}$$

wobei t die Steigung der Windung des Schneckenförderers ist und Q der in Gräd gemessene Winkel zwischen zwei aufeinanderfolgenden verschleißresistenten Elementen (10) ist.

8. Schneckenförderer nach Anspruch 7, dadurch gekennzeichnet, daß die länglichen verschleißresistenten Elemente (10) einen rechteckigen Querschnitt mit einer Höhe h, die der Abstand von der radialen Außenkontur (8) der Windung oder der Windungen zu einem Außenrand der verschleißresistenten Elemente (10) ist, und mit einer Breite b aufweist, die zwischen 10% und 25% der Länge l beträgt.

9. Schneckenförderer nach einem der Ansprüche 6 bis 8, dadurch gekennzeichnet, daß die verschleißresistenten Elemente (10) abnehmbar an Haltevorrichtungen (12) angebracht (13,14) sind, die an der Windung oder den Windungen der Förderschnecke befestigt sind.

**10.** Schneckenförderer nach einem der Ansprüche 7 bis 9, dadurch gekennzeichnet, daß der Winkel (Q) zwischen den verschleißresistenten Elementen (10) zwischen 60° und 90° beträgt.

**Revendications**

**1.** Convoyeur à vis ou à hélice destiné à transporter des matières solides, consistant en une vis (11) de convoyeur avec au moins un filet hélicoïdal qui, pendant la rotation dans un tube fermé (3) ou une auge semi-circulaire (6), fonctionne comme un support vis-à-vis des matières solides concernées, et qui comporte, sur sa surface active, des éléments (10) résistants à l'usure qui s'étendent au-delà du contour extérieur radial (8) du ou des filets, cette vis (11 )de convoyeur ne comportant aucun noyau ou axe de support, caractérisé par le fait que les éléments (10) résistants à l'usure qui sont fixés de façon inamovible au contour extérieur radial (8) du ou des filets sont placés à des intervalles réguliers dans une direction circonférencielle autour du contour (8), que la vis (11) de convoyeur est supportée par les éléments (10) résistants à l'usure et repose sur certains de ces éléments, principalement ceux qui se trouvent à la base en permanence, tandis qu'elle est supportée et guidée latéralement par d'autres éléments (10) résistants à l'usure qui se trouvent près des côtés de l'auge (6) ou du tube (3) et par le fait que les éléments (10) résistants à l'usure sont longitudinaux, avec leur plus grande dimension (1) dans la direction axiale de la vis de convoyeur (11).

**2.** Convoyeur à vis selon la revendication 1, qui comporte un seul filet hélicoïdal et qui est caractérisé par le fait que les éléments (10) résistants à l'usure sont placés de façon équidistante à un intervalle angulaire Q et sur une longueur l dans la direction axiale de la vis (11) de convoyeur, déterminée par la condition suivante:

$$l > \frac{t * Q}{360},$$

où t est le pas du convoyeur à vis et Q est l'angle mesuré en degrés entre deux éléments (10) résistants à l'usure.

**3.** Convoyeur à vis selon la revendication 1, caractérisé par le fait que les éléments (10) résistants à l'usure ont une section transversale rectangulaire ayant une hauteur h qui est la distance entre le contour extérieur radial (8) du ou des filets et le bord extérieur des éléments (10) résistants à l'usure et une largeur b qui est comprise entre 10% et 25% de la longueur l.

**4.** Convoyeur à vis selon toutes les revendications précédentes, caractérisé par le fait que les éléments (10) résistants à l'usure sont fixés, de manière à pouvoir êtres démontés (13, 14), à des dispositifs de retenue (12) fixés au ou aux filets de la vis de convoyeur.

**5.** Convoyeur à vis selon toutes les revendications 2 à 4, caractérisé par le fait que l'angle (Q) entre les éléments (10) résistants à l'usure est compris entre 60° et 90°.

**6.** Convoyeur à vis ou à hélice destiné à transporter des matières solides, consistant en une vis (11) de convoyeur avec au moins un filet hélicoïdal qui, pendant la rotation dans un cylindre fermé (3) ou une auge semi-circulaire (6), fonctionne comme un support vis-à-vis des matières solides concernées, et qui comporte, sur sa surface active, des éléments (10) résistants à l'usure, qui s'étendent au-delà du contour extérieur radial (8) du ou des filets, cette vis (11) de convoyeur ne comportant aucun noyau ou axe de support, caractérisé par le fait que les éléments (10) résistants à l'usure, qui sont fixés de façon inamovible au contour extérieur radial (8) du ou des filets, sont placés à des intervalles réguliers dans une direction circonférencielle autour du contour (8), et par le fait que les éléments (10) résistants à l'usure sont longitudinaux, avec leur plus grande dimension (l) dans la direction axiale de la vis du convoyeur.

**7.** Convoyeur selon la revendication 6, qui comporte un seul filet hélicoïdal et qui est caractérisé par le fait que les éléments (10 résistants à l'usure sont placés de façon équidistante à un intervalle angulaire Q et sur une longueur l dans la direction axiale de la vis (11) de convoyeur déterminée par la condition suivante:

$$l > \frac{t * Q}{360},$$

où t est le pas du convoyeur à vis et Q est l'angle mesuré en degrés entre deux éléments (10) résistants à l'usure.

**8.** Convoyeur à vis selon la revendication 1, caractérisé par le fait que les éléments (10) résistants à l'usure ont une section transversale rectangulaire ayant une hauteur h qui est la distance entre le contour extérieur radial (8) du ou des filets et le bord extérieur des éléments (10) résistants à l'usure et une largeur b qui est comprise entre 10% et 25% de la longueur l.

9. Convoyeur à vis selon toutes les revendications précédentes, caractérisé par le fait que les éléments (10) résistants à l'usure sont fixés, de manière à pouvoir êtres démontés (13, 14), à des dispositifs de retenue (12) fixés au ou aux filets de la vis de convoyeur.

10. Convoyeur à vis selon toutes les revendications 7 à 9, caractérisé par le fait que l'angle (Q) entre les éléments (10) résistants à l'usure est compris entre 60° et 90°.

Fig.1.

Fig. 3

Fig. 2

EP 0 702 658 B1

Fig. 4

Fig. 5

Fig. 6

EP 0 702 658 B1

Fig. 7

Fig. 8

1.11

Fig. 9

EP 0 702 658 B1

Fig. 10